# EUROPEAN PATENT APPLICATION

(11) **EP 2 007 063 A1**
(43) Date of publication of application: **24.12.2008**
(21) Application number: 07817003.2
(22) Date of filing: 28.09.2007
(51) Int. Cl.: H04L 9/32

(54) **A USER AUTHENTICATION METHOD, APPARATUS AND SYSTEM FOR PASSIVE OPTICAL NETWORK**

(30) Priority: 29.09.2006 CN 200610062942
(71) Applicant: Huawei Technologies Co., Ltd., Shenzhen, Guangdong Province 518129 (CN)
(72) Inventor: GAO, Hai, Shenzhen Guangdong Province 518129 (CN); LIN, Huafeng, Shenzhen Guangdong Province 518129 (CN)
(74) Representative: Pfenning, Meinig & Partner GbR
(86) International application number: PCT/CN2007/070812
(87) International publication number: WO 2008/040256

(57) **Abstract**

A user authentication method, apparatus and system for passive optical network. The method comprises: Optical Line Terminal OLT receives an user authenticating request from Optical Network Unit ONU, the authenticating request bringing a cryptographic identification; said OLT performs authentication according to the user cryptographic identification sent by said ONU, and then opens or closes a path from the ONU to a network side according to the authentication result. A passive optical network and an Optical Line Terminal OLT are also provided. The user authentication method provided by the present invention can enable the passive optical network user management and administration to be easier and more convenient, and improve the terminal interchangeability and the user security. Further, after the user changes the ONU, the new ONU also can access the network using the cryptographic identification.

## Description

This application claims the priority of a Chinese Patent Application No. 200610062942.8, entitled "METHOD FOR USER AUTHENTICATION IN PASSIVE OPTICAL NETWORK", filed on Sep. 29, 2006, with the Chinese State Intellectual Property Office, the entirety of which is incorporated herein by reference.

### FIELD OF THE INVENTION

The present invention relates to the field of communication technologies, in particular, to communication security technologies, and specifically, to a method, a device and a system for user authentication in a Passive Optical Network (PON).

### BACKGROUND OF THE INVENTION

As the scale of broadband access network becomes larger and larger, most of the existing Local Area Networks (LANs) run on a network of 100Mbit/s, and many large-scale commercial corporations are transiting to Gigabit Ethernet (GE). However, on Metro Core network and Metro Edge network, SONET/SDH/GE bandwidth capacity is very abundant. As a result, a serious bandwidth bottleneck occurs in the part of access network.

Compared to cable transmission, optical fiber transmission has the advantages of large capacity, low loss and strong electromagnetic interference-proof capability, etc. Therefore, as the cost of the optical fiber transmission is decreasing gradually, the fiber-based access network becomes an inevitable development trend. The access network segment representative of "Last Kilometer" part has the requirements of ultralow cost, simple structure and easy implementation, etc., which brings a great challenge to the implementation of the technology. Passive Optical Network (PON) employs passive components; therefore, it becomes the most potential technology for realizing a broadband optical access network.

As classified according to the carried content, PON mainly includes ATM Based PON (APON), Ethernet Based PON (EPON) and Gigabit-capable PON (GPON), etc. In a PON, no active components exist between a central switching office and a user premises network; instead, passive optical components are inserted into the network, and the traffic transmitted is guided by splitting the power of the optical wavelength on the whole path. With this substitution, it is unnecessary for the service provider to supply energy to and maintain the active components in the transmission loop, thereby lowering the cost of the service provider. Passive optical splitters and couplers only have the function of light transfer and restriction, and no power supply and information processing are needed; moreover, they have an unrestricted Mean Time Between Failures (MTBF). Therefore, the overall maintenance cost of the service provider may be lowered.

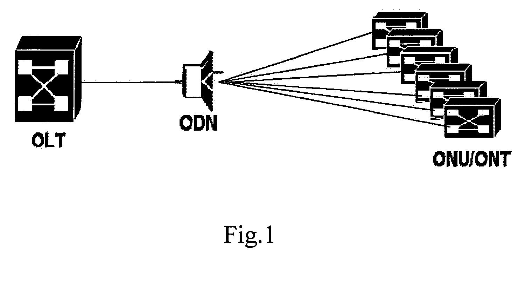

As shown in Figure 1, a PON usually consists of an Optical Line Terminal (OLT) located in a Central Office (CO) and a series of Optical Network Units (ONU) located in user premises. An Optical Distribution Network (ODN) consisted of a fiber, a passive optical splitter or a coupler lies between these components. In a PON, a single fiber may be pulled out from the Central office to a broadband service subarea or an office park, and then several tributaries will be split from the main fiber to each building or service device with a passive optical splitter or a coupler. In this mode, a plurality of users may share the expensive fiber link between the Central office and the user premises; therefore, the cost using Fiber To The Building (FTTB) and Fiber To The Home (FTTH) will be lowered greatly.

By employing the technologies of APON/BPON, EPON, or GPON that is about to be standardized, the backbone fiber in a PON may support a rate of 155Mbit/s, 622Mbit/s, 1.25Gbit/s or 2.5Gbit/s. In order to support voice, data and video applications simultaneously, the bandwidth of each user may be allocated statically or dynamically.

Authentication is usually required when a service carried on an ONU is used. At present, according to network hierarchy and network level, the authentication may be divided into two stages: OLT authentication and Broadband Remote Access Server (BRAS) authentication. OLT authentication is responsible for the gate switch from a PON to a convergence layer network, and BRAS authentication is responsible for the gate switch from a user terminal to the service network, such as Internet.

Currently, in the process of OLT authentication of PON, the MAC address or serial number of the ONU is usually used for authentication; in other words, when a user opens an account on a PON, the OLT registers the MAC address or serial number of the user ONU, and subsequently, when the ONU registers in the PON, it will be authenticated according to its MAC address or serial number, thereby determining whether the ONU (or said as user) is allowed to access the operator network.

During the above process, in EPON, the key information for authentication is MAC address; in GPON, the key information for authentication is ONU serial number. Such an authentication mode is used for ONU terminal equipment; after the user changes the ONU, the authentication will be failed and the user will be unable to access the network. Therefore, if a user opens an account, the characteristic information of the ONU (MAC address, serial number, etc.) to be used needs to be registered one by one. This process is very complex and inconvenient.

### SUMMARY OF THE INVENTION

The embodiments of the invention provides a method, a device and a system for user authentication on a PON, with which the network may be accessed smoothly when the user changes the ONU, and the user will not be troubled to register the characteristic information of the ONU he/she obtains.

The invention provides a method for user authentication, which includes the following steps.

An OLT receives a user authentication request initiated by an ONU, which carries a password ID; and

the OLT performs an authentication judgment according to the user password ID reported by the ONU, and controls a channel from the ONU to the network side according to the judgment result.

The invention provides a Passive Optical Network, which includes an OLT and an ONU. The ONU includes:
a sending unit, adapted to send a user authentication request carrying a password ID; and

The OLT includes:
a receiving unit, adapted to receive the user authentication request carrying a password ID sent by the ONU;
an authentication unit, adapted to authenticate the corresponding user according to the user password ID reported by the ONU; and
a control unit, adapted to control a channel from the ONU to the network side according to the authentication result, and open the channel from the ONU to the network side after the authentication is passed.

The invention further provides an OLT, which includes:
a receiving unit, adapted to receive the user authentication request carrying a password ID sent by the ONU;
an authentication unit, adapted to authenticate the corresponding user according to the user password ID reported by the ONU; and
a control unit, adapted to control a channel from the ONU to the network side according to the authentication result, and open the channel from the ONU to the network side after the authentication is passed.

In the method for user authentication on a PON according to the embodiments of the invention, a request message, which carries a password ID, is sent to an OLT from an ONU, and the OLT determines whether to open a channel from the ONU to the network convergence layer according to the password ID received. As a result, the user provisioning and management of PON may be easier and simpler, and terminal interchangeability and user security may be improved; moreover, after the user changes the ONU, the new ONU can access the network using the same password ID.

### BRIEF DESCRIPTION OF THE DRAWINGS

Figure 1 is a functional block diagram of a PON in the prior art;

Figure 2 is a flow chart of the method for user authentication on a PON according to an embodiment of the present invention; and

Figure 3 is a functional block diagram of a PON according to an embodiment of the present invention.

### DETAILED DESCRIPTION OF THE EMBODIMENTS

In the technical solutions according to embodiments of the present invention, when a PON user registers an account opening application with an operator, a user name and a password are obtained. The user name and the password may also be obtained in other ways. For example, the PON user may subscribe an account opening application with a server of the operator, and the server automatically assigns a user name and a password. For the ONU of the PON, the user may purchase the product complied with the standard in the market or obtain it from the operator.

After being connected with a Personal Computer (PC) correctly and powered on, the ONU starts to register with an OLT in the PON. Then, the user accesses the Internet via the PC, and the ONU requests the user to input the user name and the password (which may be in the mode of Hyper Text Transfer Protocol (HTTP) Portal). After obtaining the user name and the password input by the user, the ONU sends the user name and the password to the OLT for authentication via such a protocol. The OLT determines whether the user name and the password are valid according to an internal authentication information database. If the user name and the password are valid, the upstream and downstream traffic of the user is allowed to pass through the OLT; in other words, the upstream and downstream traffic of the user may pass through the channel from the ONU to the network convergence layer. If the user name and the password are not valid, the upstream and downstream traffic of the user is not allowed to pass through the OLT; in other words, the channel from the ONU to the network convergence layer is closed for the user.

The user name and the password provided to the user by the server of the operator may appear as a single user name or password, and the user will input a string of characters as the password ID. Hereinafter, the password ID will be used for representing the user name and password information obtained by the user. When the user accesses the network for the first time, the ONU prompts the user to input the password ID, in HTTP portal mode or Web network management mode specifically. After obtaining the password ID of the user, the ONU initiates a user authentication request to the OLT in the following communication process, and determines whether the ONU is allowed to access the convergence layer network of the operator according to the authentication result. The password ID of the user may be temporarily stored inside the ONU, so that the ONU may automatically initiates a user authentication to the OLT according to the temporarily stored password ID after the first password ID prompting and authentication process. As a result, the step in which the user inputs the password ID may be omitted and this is convenient for the user.

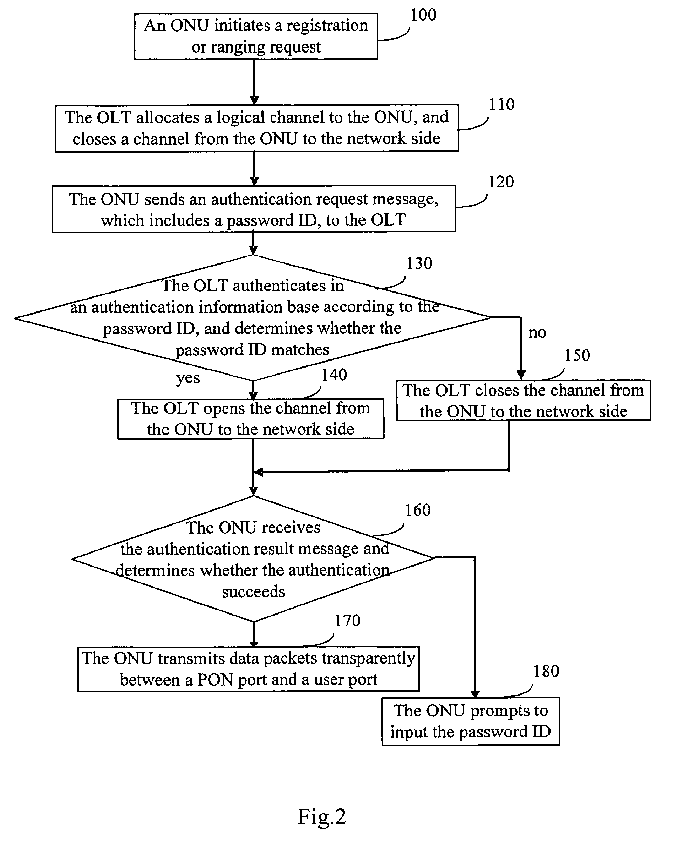

As shown in Figure 2, the process in which an ONU is powered on, registers and initiates a user authentication will be described as follows.

Block 100: After powered on, an ONU initiates a registration (in EPON) or ranging request (in GPON) according to a protocol message sent by an OLT; in this process, the ONU reports its device identification, such as MAC address or serial number, to the OLT.

Block 110: The OLT allocates a corresponding logical channel to the ONU, for example, LLID is allocated to the ONU in EPON, ONUID or Port ID is allocated to the ONU in GPON; a logical point-to-point communication link is established between the OLT and the ONU; the OLT identifies the ONU as in registered but unauthenticated state, so that the channel from the ONU to the uplink network side is kept in closed state; at this time, the ONU may not access the convergence layer network of the operator.

Block 120: The ONU extends the current protocol, and sends an authentication request message, which includes a password ID input by the user or temporarily stored internally, to the OLT.

The user password ID is null when the ONU is manufactured. Before initiating an authentication request, the ONU checks whether the password ID is null; if it is null, the ONU prompts the user to input the password ID information, and this may be realized in HTTP mode.

In EPON, the authentication request message is carried through extending Ethernet Operation Administration Management (OAM) Protocol (i.e., EPON OAM protocol in EPON). For example, in 802.3ah protocol specifications, Organization Specific Information TLV (referring to Section 57.5.2.3, IEEE Draft P 802.3ah/D3.3) is defined. After customizing Organizationally Unique Identifier, vendor can define the format of Organization Specific Value field to carry the user authentication request message, thus the authentication session related message such as authentication request can be carried in the EPON OAM protocol layer.

In GPON, after the ONU passes through the ranging phase, the OLT allocates an ONU ID to the ONU. The ONU may send a user authentication request message to the OLT by using an Operation Management Control Interface (OMCI) or Physical Layer OAM (PLOAM) message.

Block 130: After receiving the authentication request message sent by the ONU, the OLT makes a search and comparison in an internal authentication information database according to the password ID, and determines whether the password ID is matched; if it is matched and in normal authorized mode, it proceeds to Block 140; if it is unmatched or in unauthorized mode, it proceeds to Block 150.

Block 140: The OLT opens the channel from the ONU to the network side and returns an authentication result message to the ONU, then performs the subsequent operations such as ONU configuration restoration.

Block 150: When the password ID is unmatched or in unauthorized mode, the OLT closes the channel from the ONU to the uplink network side or keeps the channel in closed state, and returns a message carrying authentication failure information to the ONU.

Block 160: After receiving the authentication result message, the ONU determines whether the authentication succeeds, marks the authentication state (Succeeded or Failed) internally, and determines the message processing mode according to the authentication state; if the authentication succeeds, it proceeds to Block 170; if the authentication is failed, it proceeds to Block 180.

Block 170: The ONU forwards service traffic transparently between the PON port and user ports.

Block 180: The ONU captures the user data packets to a CPU inside the ONU, prompts the user to input the password ID, and re-authenticates.

The method for user authentication on a PON according to the present invention is also applicable for other networks, such as xDSL network, PLC network or Cable access network.

An OLT provided in an embodiment of the invention includes:
a receiving unit, adapted to receive a user authentication request carrying a password ID sent by the ONU; an authentication unit, adapted to authenticate the corresponding user according to the user password ID reported by the ONU; and a control unit, which includes several switches, adapted to open the channel from the ONU to the uplink network side after the authentication is passed.

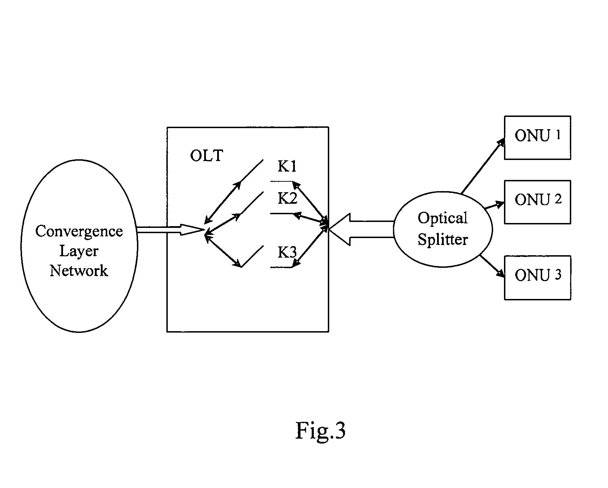

As shown in Figure 3, inside the OLT, K1, K2 and K3 are used for representing the control switches of three ONUs, ONU1, ONU2 and ONU3. In the OLT authentication process for a PON user, these switches are opened or closed by identifying user device information, user name, password information, etc.

An embodiment of the invention provides an OLT, which is adapted to receive a user authentication request sent by the ONU, and authenticate the corresponding user according to the user device information and user password ID;

open a channel from the ONU to the network side convergence layer or keep it closed according to the determination result; and

turn on the corresponding control switch and open the corresponding channel from the ONU to the network side convergence layer if the authentication is passed and the user has the authority; for example, turn on switch K1, and open the channel from ONU1 to the network side convergence layer.

An embodiment of the invention provides a PON, which includes an OLT and an ONU;

the ONU includes a sending unit, and is adapted to send a user authentication request carrying a password ID. The OLT is adapted to receive a user authentication request carrying a password ID sent by the ONU, authenticate the corresponding user according to the user password ID reported by the ONU, and control a channel from the ONU to the uplink network side according to the authentication result. The authentication and control process between the OLT and the ONU in the PON is, in particular, as follows:

the OLT receives an authentication request message sent by the ONU, and makes a search and comparison in an internal authentication information database according to the password ID;

if the password ID matches and has the authority, the OLT opens the channel from the ONU to the network side and returns an authentication result message to the ONU, and then performs the subsequent operations, such as ONU configuration sending;

if the password ID is unmatched or the authority is abnormal, the OLT keeps the channel from the ONU to the uplink network side closed and returns an authentication result message to the ONU.

It can be understood by those skilled in the art that, part or all of the units or each step in the above embodiments may be realized by instructing related hardware via a program, and the program may be stored in a computer-readable storage medium, such as ROM/RAM, magnetic disk and compact disk. Or, each of the units and steps may be manufactured as an integrated circuit module respectively, or a plurality of units or steps may be manufactured as a single integrated circuit module. Thus, the invention is not limited to any specific combination of hardware and software.

Although the illustrative embodiments of the present invention have been described above, the scope of the invention is not limited to these. Any changes or substitutions within the technical disclosure of the invention that readily occur to those skilled in the art shall be encompassed in the scope of the invention. Therefore, the scope of the invention shall be defined by the appended claims.

## Claims

1. A method for user authentication, comprising:
receiving, by an Optical Line Terminal, OLT, a user authentication request initiated by an Optical Network Unit, ONU, which carries a password Identification, ID; and
authenticating, by the OLT, according to the user password ID reported by the ONU, and controlling the state of a channel from the ONU to the uplink network side.

2. The method for user authentication according to claim 1, further comprising the following steps before the step of authenticating, by the OLT, according to the user password ID reported by the ONU:
receiving, by the OLT, a registration or ranging request initiated by the ONU; and
allocating, by the OLT, a corresponding logical channel to the ONU.

3. The method for user authentication according to claim 2, further comprising:
obtaining, by the OLT, device information reported by the ONU for identifying a user.

4. The method for user authentication according to claim 1, wherein, in Ethernet based Passive Optical Network, EPON, the authentication request is carried by extending the Ethernet Operation Administration Management, OAM, protocol for sending the authentication request message.

5. The method for user authentication according to claim 1 or 2, further comprising:
receiving, by the OLT, an authentication request message sent by the ONU, and making a search and comparison in an internal authentication information database according to the password ID; and
opening, by the OLT, the channel from the ONU to the network side and returning an authentication result message to the ONU, if the password ID matches and has an authority.

6. The method for user authentication according to any one of claims 1 to 3, wherein, the password ID is obtained when a Passive Optical Network, PON, user registers with the operator an account opening application.

7. A Passive Optical Network, PON, comprising an Optical Line Terminal, OLT, and an Optical Network Unit, ONU, wherein the ONU comprises:
a sending unit, adapted to send a user authentication request carrying a password Identification, ID; and
wherein the OLT comprises:
a receiving unit, adapted to receive the user authentication request carrying the password ID sent by the ONU;
an authentication unit, adapted to authenticate a user according to the user password ID reported by the ONU; and
a control unit, adapted to control a channel from the ONU to the network side according to the authentication result, and open the channel from the ONU to the network side after the authentication is passed.

8. The PON according to claim 7, wherein:
the authentication unit is also adapted to make a search and comparison in an internal authentication information database according to the password ID, after the OLT receives an authentication request message sent by the ONU; and
the control unit is also adapted to open the channel from the ONU to the network side and returns an authentication result message to the ONU, if the password ID matches and has the authority.

9. The PON according to claim 8, wherein:
the ONU is adapted to mark the authentication state internally and determines the message processing mode according to the authentication state, upon receiving the authentication result message.

10. The PON according to claim 7, wherein:
the ONU is adapted to check whether the password ID inside the ONU is null, and prompts the user to input the password ID information if the password ID is null, before initiating the authentication request.

11. The PON according to claim 7, wherein, the PON is a Gigabit PON, GPON, and the ONU sends the user authentication request message to the OLT using an Operation Management Control Interface, OMCI or Physical Layer OAM message.

12. The PON according to claim 7, wherein:
the ONU is adapted to transmit data packets transparently between a PON port and a user port after the authentication succeeds; and
the ONU is adapted to prompt the user to input the password ID and re-authenticates after the authentication fails.

13. The PON according to claim 12, wherein, the ONU prompts the user to input the password ID via Hyper Text Transfer Protocol, HTTP.

14. An Optical Line Terminal, OLT, comprising:
a receiving unit, adapted to receive an user authentication request carrying a password ID sent by an Optical Network Unit, ONU;
an authentication unit, adapted to authenticate a corresponding user according to the user password ID reported by the ONU; and
a control unit, adapted to control a channel from the ONU to the network side according to the authentication result, and open the channel from the ONU to the network side after the authentication is passed.

15. The OLT according to claim 14, wherein, the control unit comprises:
a plurality of switches, adapted to open or close a channel from the ONU to the network side.
